(19) Europäisches Patentamt / European Patent Office / Office européen des brevets

(11) **EP 3 346 577 A1**

(12) **EUROPEAN PATENT APPLICATION**
published in accordance with Art. 153(4) EPC

(43) Date of publication:
**11.07.2018 Bulletin 2018/28**

(51) Int Cl.:
*H02J 7/32* *(2006.01)*

(21) Application number: **15902804.2**

(22) Date of filing: **21.12.2015**

(86) International application number:
**PCT/CN2015/098064**

(87) International publication number:
**WO 2017/035999 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.08.2015 CN 201510549363**

(71) Applicant: **BOE Technology Group Co., Ltd. Beijing 100015 (CN)**

(72) Inventors:
• **ZHANG, Wei**
  **Beijing 100176 (CN)**
• **CAO, Zhanfeng**
  **Beijing 100176 (CN)**
• **ZHANG, Bin**
  **Beijing 100176 (CN)**

(74) Representative: **Brötz, Helmut et al
Rieder & Partner mbB
Patentanwälte - Rechtsanwalt
Corneliusstrasse 45
42329 Wuppertal (DE)**

(54) **WEARABLE POWER GENERATION DEVICE, WEARABLE CLOTHES CAPABLE OF GENERATING POWER, AND POWER GENERATION METHOD**

(57)    A wearable power generation device, wearable clothes capable of generating power, and a power generation method. The wearable power generation device comprises at least one magnet unit (1), at least one electromagnetic induction unit (2), and at least an energy storage unit (3) electrically connected to the at least one electromagnetic induction unit (2). The magnet unit (1) and the electromagnetic induction unit (2) are respectively disposed to be worn on different parts of an animal body. During movement of the animal body, the magnetic flux passing through the electromagnetic induction unit (2) is changed to generate an induction current by changing the relative position of the magnet unit (1) and the electromagnetic unit (2). The energy storage unit (3) is configured to convert the induction current generated by the electromagnetic induction unit (2) into electric energy for storage.

FIG. 3c

**Description**

TECHNICAL FIELD

Embodiments of the present disclosure relate to a wearable power generation device, a wearable power generation garment and a power generation method.

BACKGROUND

In recent years, with the popularity of smart phones and mini tablets, more and more people adopt smart phones for information retrieval and acquisition. But when the mobile phones and the tablets are used, people are often upset by problems, such as limited cell capacity, large power consumption of smart machines, and inconvenient charging at many times. For instance, in a situation that users need urgent communication while the mobile phones are out of power, but there is no emergency power supply.

SUMMARY

Embodiments of the present disclosure provide a wearable power generation device, a wearable power generation garment and a power generation method.

A wearable power generation device according to an embodiment of the present disclsoure, including: at least one magnet unit, at least one electromagnetic induction unit and an energy storage unit electrically connected with the at least one electromagnetic induction unit. The magnet unit and the electromagnetic induction unit are respectively designed to be worn at different positions of an animal body. Induced current is generated by a change of the magnetic flux running through the electromagnetic induction unit due to a change of relative positions of the magnet unit and the electromagnetic induction unit during movement of the animal body. The energy storage unit is configured to convert the induced current generated by the electromagnetic induction unit into electric energy for storage.

In an example of the wearable power generation device, the magnet unit and the electromagnetic induction unit are respectively disposed on the limbs and/or the trunk of the human being.

In an example of the wearable power generation device, the magnet unit includes at least one magnet, and the electromagnetic induction unit includes a single closed loop or a plurality of parallel closed loops.

In an example of the wearable power generation device, the magnet is a flexible magnet.

In an example of the wearable power generation device, a surface magnetic field strength of the magnet unit is greater than or equal to 0.3T.

In an example of the wearable power generation device, further including a display unit, the display unit being configured to display a value of the electric energy stored by the energy storage unit.

A wearable power generation garment according to an embodiment of the present disclsoure, including: a garment body; at least one magnet unit; at least one electromagnetic induction unit; and an energy storage unit electrically connected with the at least one electromagnetic induction unit. The magnet unit and the electromagnetic induction unit are respectively fixed at different positions of the body. Induced current is generated by a change of the magnetic flux running through the electromagnetic induction unit due to a change of relative positions of the magnet unit and the electromagnetic induction unit during a movement of an animal body wearing the power generation garment. The energy storage unit is configured to convert the induced current generated by the electromagnetic induction unit into electrical energy for storage.

In an example of the wearable power generation garment, the body is a pair of trousers. The magnet unit is disposed on one trouser leg of the trousers; and the electromagnetic induction unit is disposed on the other trouser leg.

In an example of the wearable power generation garment, the body is a coat with sleeves. The magnet unit is disposed on one sleeve of the coat, and the electromagnetic induction unit is disposed on the other sleeve; or the magnet unit is disposed on one of the sleeve and the body of the coat, and the electromagnetic induction unit is disposed on the other of the sleeve and the body.

In an example of the wearable power generation garment, both the magnet unit and the electromagnetic induction unit are disposed on insides of the trouser legs, so that the magnet unit and the electromagnetic induction unit can be oppositely arranged.

In an example of the wearable power generation garment, the magnet unit is fixed on a side surface of the body of the coat, and the electromagnetic induction unit is fixed at a relative position on an inside of the sleeves of the coat, so that the magnet unit and the electromagnetic induction unit is oppositely arranged; or the electromagnetic induction unit is fixed on a side surface of the body of the coat, and the magnet unit is fixed at a corresponding position on an inside of the sleeves of the coat, so that the magnet unit and the electromagnetic induction unit is oppositely arranged.

In an example of the wearable power generation garment, the magnet unit is fixed on the body by sewing, bonding or binding; and/or the electromagnetic induction unit is fixed on the body by sewing, bonding or binding.

A power generation method according to an embodiment of the present disclosure, including: wearing the wearable power generation device or the wearable power generation garment on an animal body; and generating electric energy during the movement of the animal body.

BRIEF DESCRIPTION OF THE DRAWINGS

Embodiments of the present disclosure will be described in more detail below with reference to accompanying drawings to allow an ordinary skill in the art to more clearly understand embodiments of the present disclosure, in which:

FIG. 1 is a schematic structural view of a wearable power generation device provided by an embodiment of the present disclosure;
FIGS. 2a to 2c are respectively schematic structural views of wearable power generation devices provided by embodiments of the present disclosure;
FIGS. 3a to 3d are respectively schematic diagram illustrating positions of the wearable power generation device provided by embodiments of the present disclosure;
FIG. 4 is a schematic structural view of a wearable power generation device provided by an embodiment of the present disclosure;
FIGS. 5a and 5b are respectively flow diagrams of induced currents of the wearable power generation device provided by embodiments of the present disclosure;
FIG. 6a is a graph of induced electromotive force generated by a closed loop during the reciprocating motion of the closed loop and a permanent magnet;
FIG. 6b is a graph of the induced current generated by the closed loop during the reciprocating motion of the closed loop and the permanent magnet, running through a diode D1;
FIG. 6c is a graph of the induced current generated by the closed loop during the reciprocating motion of the closed loop and the permanent magnet, running through a diode D2;
FIG. 6d is a graph of the induced current generated by the closed loop during the reciprocating motion of the closed loop and the permanent magnet, running through an energy storage module; and
FIGS. 7a and 7b are respectively schematic structural views of a wearable power generation garment provided by embodiments of the present disclosure.

DETAILED DESCRIPTION

Technical solutions according to the embodiments of the present disclosure will be described clearly and fully as below in conjunction with the accompanying drawings of embodiments of the present disclosure. It is apparent that the described embodiments are just a part but not all of the embodiments of the disclosure. Based on the described embodiments herein, a person of ordinary skill in the art can obtain other embodiment(s), without any creative work, which shall be within the scope of the present disclosure.

Unless otherwise defined, all the technical and scientific terms used herein have the same meanings as commonly understood by a person of ordinary skill in the art to which the present disclosure belongs. The terms, such as "first," "second," or the like, which are used in the description and the claims of the present disclosure, are not intended to indicate any sequence, amount or importance, but for distinguishing various components. Also, the terms, such as "a," "an," "the," or the like, are not intended to limit the amount, but may be for indicating the existence of at lease one. The terms, such as "comprise/comprising," "include/including," or the like are intended to specify that the elements or the objects stated before these terms encompass the elements or the objects and equivalents thereof listed after these terms, but not preclude other elements or objects. The terms, "on," "under," or the like are only used to indicate relative position relationship, and when the position of the object which is described is changed, the relative position relationship may be changed accordingly.

In daily life, we often encounter a situation that an urgent communication is required while the mobile phone is out of power but no emergency power supply may be used. In this case, we hope there is a power generation device which can be charged readily and is portable. Embodiments of the present disclosure provide a wearable power generation device, a wearable power generation garment and a power generation method.

With reference to the accompanying drawings, detailed description will be given below to examples of the wearable power generation device, the wearable power generation garment and the power generation method, provided by embodiments of the present disclosure.

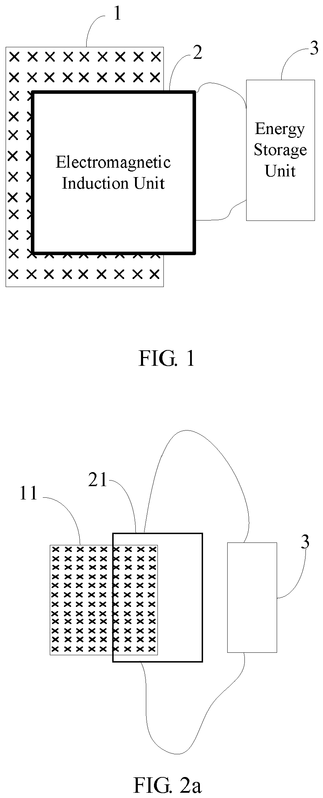

The embodiment of the present disclosure provides a wearable power generation device, which, as shown in FIG. 1, includes: at least one magnet unit 1 (only one is shown in FIG. 1), at least one electromagnetic induction unit 2 (only one is shown in FIG. 1) and an energy storage unit 3 electrically connected with the at least one electromagnetic induction unit 2.

The magnet unit 1 and the electromagnetic induction unit 2 are respectively disposed at different positions of an animal body. Induced current is generated by the change of the magnetic flux running through the electromagnetic induction unit 2 due to the change of relative positions of the magnet unit 1 and the electromagnetic induction unit 2 during the movement of the animal body.

The energy storage unit 3 is configured to convert the induced current generated by the electromagnetic induction unit 2 into electric energy for storage.

The wearable power generation device provided by the embodiment of the present disclosure includes: at least one magnet unit, at least one electromagnetic induction unit and an energy storage unit electrically connected with the at least one electromagnetic induction unit. The magnet unit and the electromagnetic induction unit are respectively disposed at different positions of an animal body. Induced current is generated by the change of the magnetic flux running through the electromagnetic induction unit due to the change of relative positions of the magnet unit and the electromagnetic induction unit during the movement of the animal body. The energy storage unit is configured to convert the induced current generated by the electromagnetic induction unit into electric energy for storage. The power generation device applies the law of electromagnetic induction, generates electricity by the generation of the induced current due to the change of the magnetic flux running through the electromagnetic induction unit by the movement of the animal body, and stores the electric energy for later use. The power generation device has advantages of simple structure, portable, convenient, environment-friendly, noise-free and low cost.

It is noted that, in the wearable power generation device provided by the embodiment of the present disclosure, the magnet unit and the electromagnetic induction unit are respectively designed to be worn at different positions of an animal body. The animal may be a cat and a dog, and it may also be a human being, but the embodiments of the present disclosure are not limited thereto.

Detailed description will be given below to the wearable power generation device provided by an embodiment of the present disclosure by taking an instance that the animal body is a human being as an example.

In an example, in the wearable power generation device provided by the embodiment of the present disclosure, the magnet unit and the electromagnetic induction unit are respectively designed to be worn on the limbs and/or the trunk of a human being. The limbs may be arms, hands, legs or feet, but the embodiments of the present disclosure are not limited thereto.

In an example, in the wearable power generation device provided by the embodiment of the present disclosure, when a plurality of electromagnetic induction units are arranged, it is possible that each electromagnetic induction unit is electrically connected with a single energy storage unit, or a plurality of electromagnetic induction units correspond to a single energy storage unit. But the embodiments of the present disclosure are not limited thereto.

In an example, in the wearable power generation device provided by the embodiment of the present disclosure, when a plurality of the electromagnetic induction units are provided, the plurality of electromagnetic induction units correspond to a single energy storage unit. In this way, it can accelerate the energy storage speed of the energy storage unit, and simplify the structure and reduce the cost.

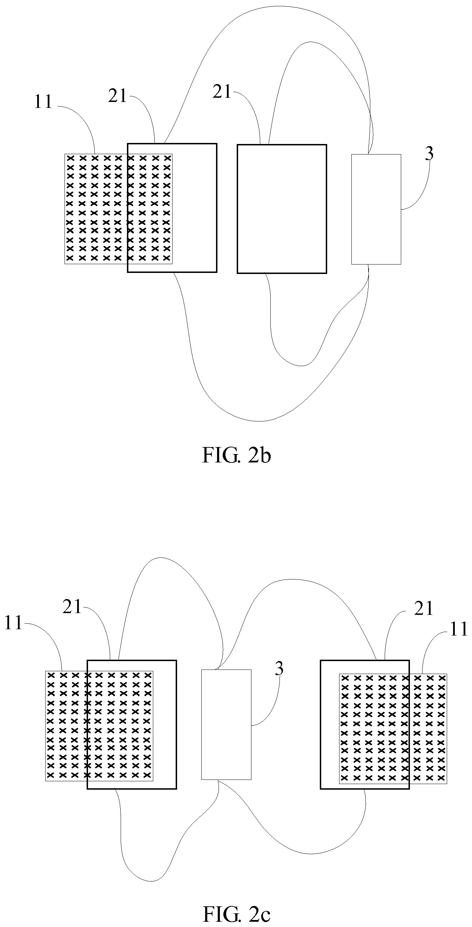

In an example, in the wearable power generation device provided by the embodiment of the present disclosure, as shown in FIGS. 2a to 2c, the magnet unit 1 includes at least one magnet 11, and the electromagnetic induction unit 2 includes a single closed loop 21 or a plurality of closed loops 21 in parallel. But the embodiments of the present disclosure are not limited thereto.

In an example, in the wearable power generation device provided by the embodiment of the present disclosure, the magnet is a permanent magnet.

In an example, in the wearable power generation device provided by the embodiment of the present disclosure, the area encircled by the closed loop is set to be equal to the opposite area of the permanent magnet, which can avoid the case of unchanged magnetic flux during the relative motion of the permanent magnet and the closed loop.

In an example, in the wearable power generation device provided by the embodiment of the present disclosure, the magnet is a flexible magnet, so that the wearable power generation device can be easy to wear, and it also can allow the carrier to be more comfortable.

In the wearable power generation device provided by the embodiment of the present disclosure, the more the number of the parallel closed loops in the electromagnetic induction unit is, the more the generated induced electric energy is. But too numerous closed loops may affect the movement of the carrier.

Similarly, in the wearable power generation device provided by the embodiment of the present disclosure, the larger the area encircled by the closed loop and the opposite area of the magnet are, the more the generated induced electric energy is. But too larger opposite area may also affect the movement of the carrier.

In the wearable power generation device provided by the embodiment of the present disclosure, under the same condition, the closer the distance between the electromagnetic unit and the electromagnetic induction unit is, the larger the generated induced electromotive force is. Therefore, in an example, the electromagnetic unit and the electromagnetic induction unit are set to be worn at positions of the animal body as close as possible.

Detailed description will be given below to the assembled positions of the magnet unit and the electromagnetic induction unit in the present disclosure with reference to the examplary embodiments. It is noted that the embodiments are used for better understanding of the present disclosure, but the embodiments of the present disclosure are not limited thereto.

First Embodiment:

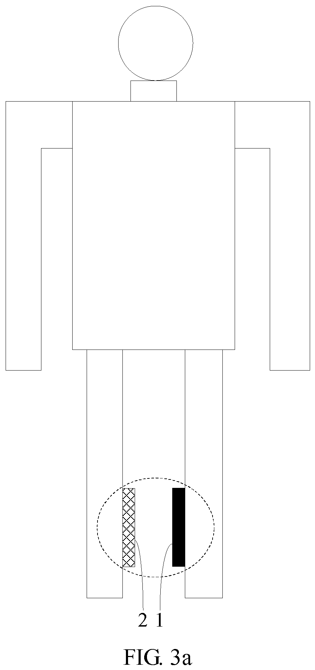

In the wearable power generation device provided by the embodiment of the present disclosure, as shown in FIG. 3a, the magnet unit 1 and the electromagnetic induction unit 2 are respectively designed to be worn at corresponding positions on the inside of two legs of the human body.

In an example, the magnet unit 1 may be designed to be worn on a left leg and the electromagnetic induction unit 2 may be designed to be worn on a right leg, or the magnet unit 1 may be designed to be worn on the right leg and the electromagnetic induction unit 2 may be designed to be worn on the left leg. But the embodiments of the present disclosure are not limited thereto.

In this way, when the human body is moving around, the relative positions of the two legs change, so that the relative positions of the magnet unit and the electromagnetic induction unit change, so that induced current is generated due to the change of the magnetic flux running through the electromagnetic induction unit.

Second Embodiment:

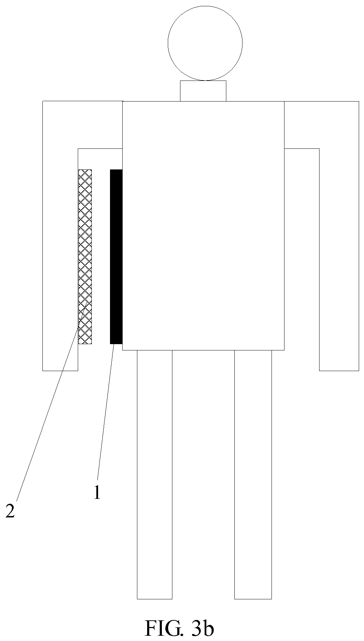

In the wearable power generation device provided by the embodiment of the present disclosure, as shown in FIG. 3b, the magnet unit 1 and the electromagnetic induction unit 2 are respectively designed to be worn on the inside of the arm of the human body and the trunk at a relative position.

In an example, the magnet unit 1 may be designed to be worn on the inside of a left arm (or a right arm), and the electromagnetic induction unit 2 may be designed to be worn at a relative position of the left trunk (or the right trunk); Or, in another example, the electromagnetic induction unit 2 is designed to be worn on the inside of the left arm (or the right arm), and the magnet unit 2 is designed to be worn at the relative position of the left trunk (or the right trunk). But the embodiments of the present disclosure are not limited thereto.

In this way, when the arm of the human body swings back and forth, the relative positions of the magnet unit and the electromagnetic induction unit may change, so that induced current is generated due to the change of the magnetic flux running through the electromagnetic induction unit.

Third Embodiment:

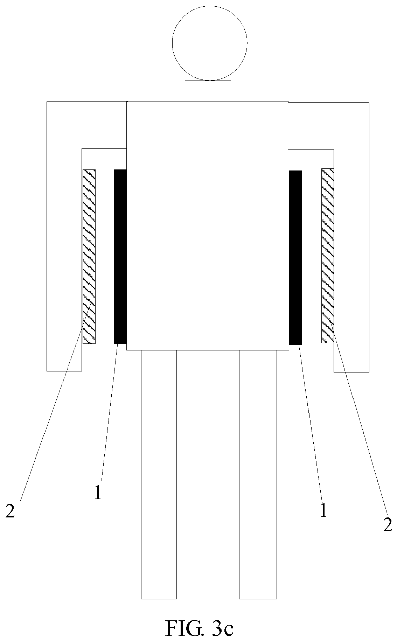

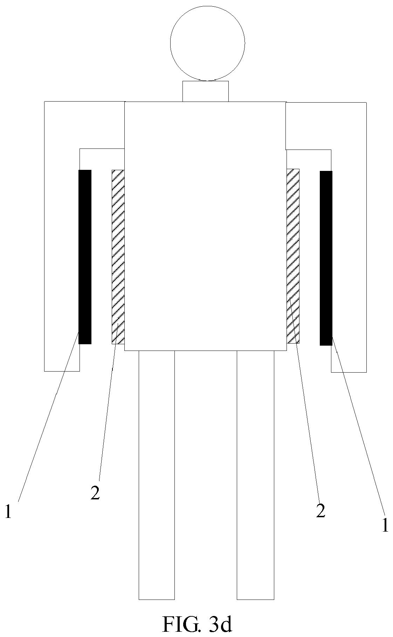

In the wearable power generation device provided by the embodiment of the present disclosure, as shown in FIG. 3c, the magnet units 1 are respectively designed to be worn on both sides of the trunk of the human body, and the electromagnetic induction units 2 are respectively designed to be worn at relative positions on the inside of the arms of the human body; or as shown in FIG. 3d, the electromagnetic induction units 2 are respectively designed to be worn on both sides of the trunk of the human body, and the magnet units 1 are respectively designed to be worn at the relative positions on the inside of the arms of the human body.

In this way, when the arms of the human body swing back and forth, the relative positions of the magnet units and the electromagnetic induction units may change, so that induced current is generated due to the change of the magnetic flux running through the electromagnetic induction units.

In an example, in the wearable power generation device provided by the embodiment of the present disclosure, the energy storage unit is designed to be worn at a position near a position at which the electromagnetic induction unit electrically connected with the energy storage unit is fixed. In this way, the length of a lead between the energy storage unit and the electromagnetic induction unit can be reduced, and the power consumption on the lead can be reduced. In another example, the lead between the energy storage unit and the electromagnetic induction unit may be lengthened, which is conducive to the placing of the energy storage unit.

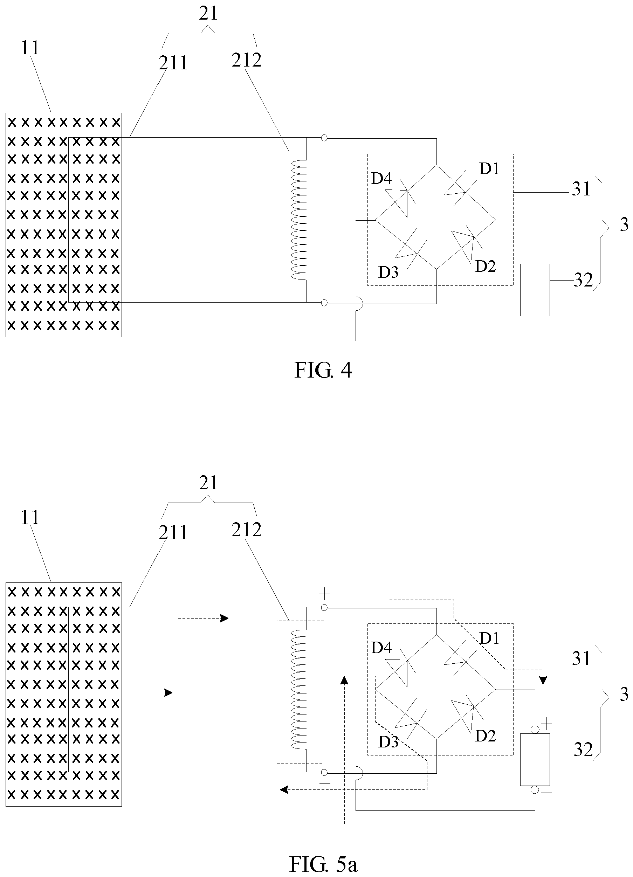

In an example, in the wearable power generation device provided by the embodiment of the present disclosure, as shown in FIG. 4, the energy storage unit 3 substantially includes AC-to-DC (an alternating current to direct current) module 31 and an energy storage module 32. Two input ends of the AC-to-DC module 31 are respectively connected with output ends of the electromagnetic induction units 2, so as to convert the induced current generated on the electromagnetic induction units 2 into DC and output the DC to the energy storage module 32 for storage.

In an example, in the wearable power generation device provided by the embodiment of the present disclosure, as shown in FIG. 4, the AC-to-DC module 31 includes a bridge rectifier circuit.

Two input ends of the bridge rectifier circuit are respectively connected with the output ends of the electromagnetic induction units 2, and two output ends are respectively connected with both ends of the energy storage module 32.

In an example, the structure of the bridge rectifier circuit is the same as the one in the art. As shown in FIG. 4, it includes 4 diodes (D1, D2, D3 and D4) substantially, but the embodiments of the present disclosure are not limited thereto.

In the wearable power generation device provided by the embodiment of the present disclosure, the energy storage module is preferably a small-size supercapacitor (within 2.7 volts), for example.

In an example, in the wearable power generation device provided by the embodiment of the present disclosure, as shown in FIG. 4, a closed loop 21 substantially includes a lead 211 and a step-up coil 212, and induced voltage generated on the lead 211 is stepped up by the step-up coil 212 and outputted to the bridge rectifier circuit.

In an example, in the wearable power generation device provided by the embodiment of the present disclosure, the surface magnetic field strength of the magnet unit is greater than or equal to 0.3T.

In an example, the wearable power generation device provided by the embodiment of the present disclosure also includes a display unit.

The display unit is configured to display the value of the electric energy stored by the energy storage unit, so that the user can conveniently check the charging condition.

Description will be given below to the charging condition of a portable charging device in the embodiment of the present disclosure by taking the structure as shown in FIG. 4 as an example.

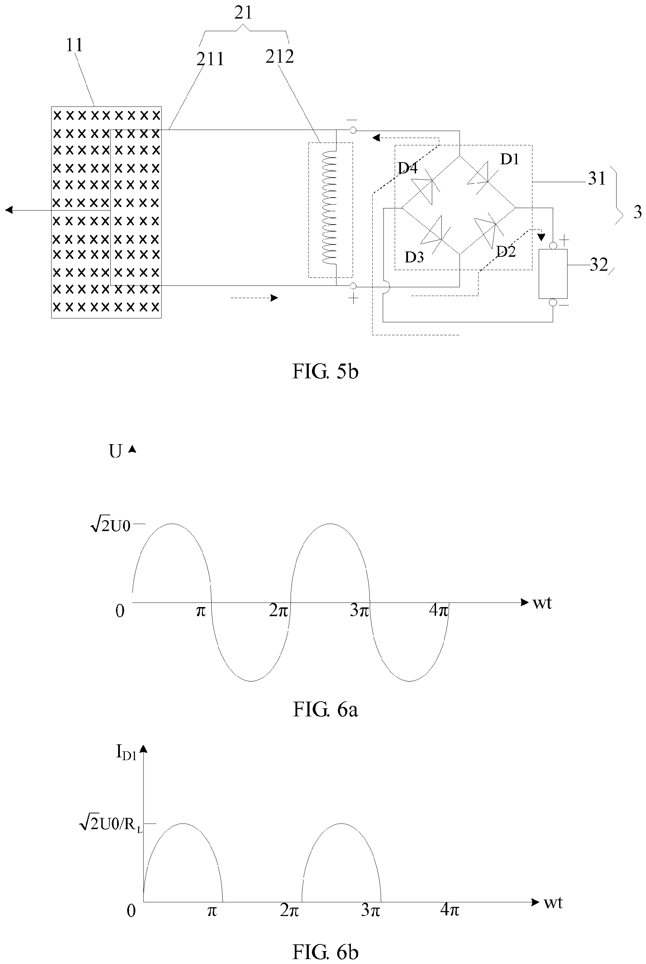

If the lead 211 moves to the right relative to the magnet 11, as shown in FIG. 5a, the flow direction of corresponding induced current is as shown by dotted arrows in the figure; if the lead 211 moves to the left relative to the magnet 11, as shown in FIG. 5b, the flow direction of corresponding induced current is as shown by dotted arrows in the figure.

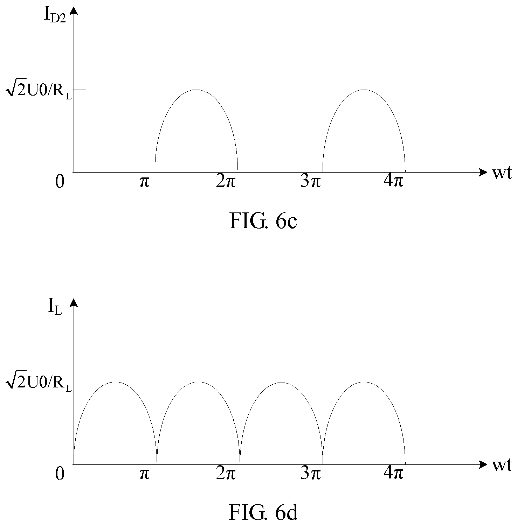

If the reciprocating motion of the closed loop 21 and the magnet 11 occurs during the movement of the human body, the current produced on the closed loop 21 is sinusoidal alternating current, and a graph of corresponding induced electromotive force U along with the swing amplitude wt is as shown in FIG. 6a. Supposing that the equivalent resistance of the energy storage module 32 is $R_L$, when the lead 211 moves to the right relative to the magnet 11, the induced current flows across the diode D1 in the bridge rectifier circuit and enters the energy storage module 32, and a graph of the current $I_{D1}$ flowing across the diode D1 along with the swing amplitude wt is as shown in FIG. 6b. When the lead 211 moves to the left relative to the magnet 11, the induced current flows across the diode D2 in the bridge rectifier circuit and enters the energy storage module 32, and a graph of the current $I_{D2}$ flowing across the diode D2 along with the swing amplitude wt is as shown in FIG. 6c. Correspondingly, during the reciprocating motion of the closed loop 21 and the magnet 11, the graph of the current $I_L$ flowing across the energy storage module 32 along with the swing amplitude wt is as shown in FIG. 6d.

Supposing that the magnetic field strength B of the magnet 11 is 0.3T and the length L of the lead 211 in cutting a magnetic field line is 0.4m, the speed of the relative motion of the closed loop 21 and the magnet 11 is 1m/s. According to the formula of the induced electromotive force E=BLV, the maximum induced electromotive force $U_{max} = E =$

BLV = 0.3T×0.4m×1m/s = 0.12V, and the effective electromotive force $U_0 = U_{max}/\sqrt{2}$ . The measured resistance of a copper wire with the length of 1 meter and the cross-sectional area of 1 square millimeter is R≈0.001678Ω; the total length of the closed loop is about 1m; if energy loss is not considered, the charging power of a single closed loop in cutting the magnetic field line is

$$p = U^2/R = (0.12/\sqrt{2})^2/0.001678 = 4.29W;$$

and finally, if the loss of the step-up coils and the diodes is omitted, the effective charging power of the single closed loop is $p_0 = 0.1p = 0.429W$.

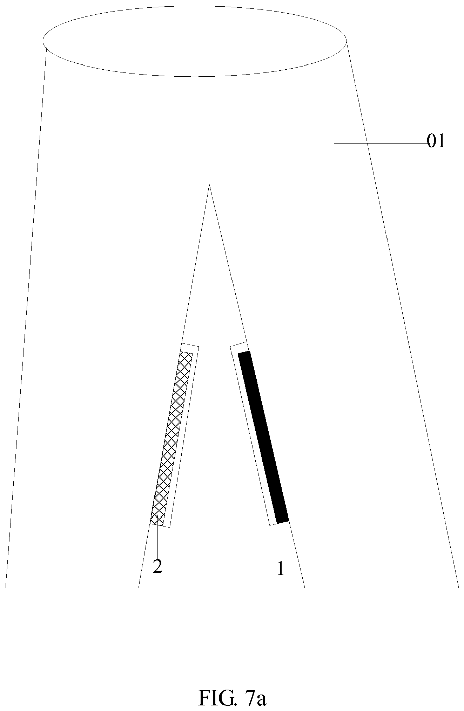

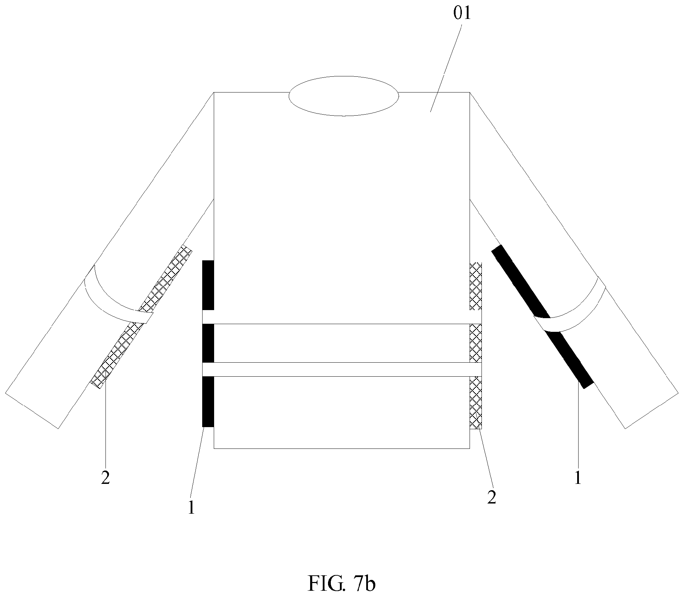

Based on the same concept, an embodiment of the present disclosure also provides a wearable power generation garment, which, as shown in FIGS. 7a and 7b, includes a garment body 01, and it also includes: at least one magnet unit 1, at least one electromagnetic induction unit 2 and an energy storage unit 3 electrically connected with the at least one electromagnetic induction unit 2.

The magnet unit 1 and the electromagnetic induction unit 2 are respectively fixed at different positions of the body 01. Induced current is generated by the change of the magnetic flux running through the electromagnetic induction unit 2 due to the change of relative positions of the magnet unit 1 and the electromagnetic induction unit 2 during the movement of an animal body wearing the power generation garment.

The energy storage unit 3 is configured to convert the induced current generated by the electromagnetic induction unit 2 into electric energy for storage.

The wearable power generation garment provided by the embodiment of the present disclosure applies the law of electromagnetic induction, generates electricity by the generation of the induced current due to the change of the magnetic flux running through the electromagnetic induction unit by the change of the relative positions of the magnet unit and the electromagnetic induction unit by the movement of the animal body wearing the power generation garment, and stores the electric energy for later use. The power generation garment has advantages of simple structure, portable, convenient, environment-friendly, noise-free and low cost.

In an example, in the wearable power generation garment provided by the embodiment of the present disclosure, as shown in FIG. 7a, the body 01 is a pair of trousers; the magnet unit 1 is disposed on one trouser leg of the trousers; and the electromagnetic induction unit 2 is disposed on the other trouser leg.

In an example, in the wearable power generation garment provided by the embodiment of the present disclosure, as shown in FIG. 7a, both the magnet unit 1 and the electromagnetic induction unit 2 are disposed on the inside of the trouser legs, so that the magnet unit 1 and the electromagnetic induction unit 2 can be oppositely arranged.

In another example, in the wearable power generation garment provided by the embodiment of the present disclosure, as shown in FIG. 7b, the body 01 is a coat with sleeves.

The magnet unit 1 is disposed on one sleeve of the coat, and the magnetic induction unit 2 is disposed on the other sleeve, or the magnet unit 1 is disposed on one of the sleeve and the body of the coat, and the electromagnetic induction unit 2 is disposed on the other of the sleeve and the body. But the embodiments of the present disclosure are not limited thereto.

In an example, in the wearable power generation garment provided by the embodiment of the present disclosure, as shown in FIG. 7b, the magnet unit 1 is fixed on a side surface of the body of the coat, and the electromagnetic induction unit 2 is fixed at a relative position on the inside of a sleeve of the coat, so that the magnet unit 1 and the electromagnetic induction unit 2 can be oppositely arranged; or in another example, the electromagnetic induction unit 2 is fixed on a side surface of the body of the coat and the magnet unit 1 is fixed at a relative position on the inside of a sleeve of the coat, so that the magnet unit 1 and the electromagnetic induction unit 2 can be oppositely arranged. But the embodiments of the present disclosure are not limited thereto.

In an example, in the wearable power generation garment provided by the embodiment of the present disclosure, the magnet unit may be fixed on the body by sewing, bonding or binding.

In an example, in the wearable power generation garment provided by the embodiment of the present disclosure, the electromagnetic induction unit may also be fixed on the body by sewing, bonding or binding. But the embodiments of the present disclosure are not limited thereto.

In an example, in the wearable power generation garment provided by the embodiment of the present disclosure, both the magnet unit and the electromagnetic induction unit are fixed on the body by sewing, bonding or binding.

In an example, in the wearable power generation garment provided by the embodiment of the present disclosure, the magnet unit includes at least one magnet, and the electromagnetic induction unit includes one closed loop or a plurality of parallel closed loops. But the embodiments of the present disclosure are not limited thereto.

In an example, in the wearable power generation garment provided by the embodiment of the present disclosure, as shown in FIG. 7a, both the magnet unit 1 and the electromagnetic induction unit 2 are fixed on the body 01 by sewing, namely it is equivalent that the magnet unit 1 and the electromagnetic induction unit 2 are sewn on two pieces of cloth. In another example, as shown in FIG. 7b, both the magnet unit 1 and the electromagnetic induction unit 2 are fixed on the body 01 by binding.

In an example, in the wearable power generation garment provided by the embodiment of the present disclosure, the magnet is a permanent magnet.

In an example, in the wearable power generation garment provided by the embodiment of the present disclosure, the area encircled by the closed loop is set to be equal to the opposite area of the permanent magnet, which can avoid the situation of unchanged magnetic flux during the relative motion of the permanent magnet and the closed loop.

In an example, in the wearable power generation garment provided by the embodiment of the present disclosure, the magnet is a flexible magnet, so that the wearable power generation garment can be easy to fix, and the wearer can be more comfortable.

In the wearable power generation garment provided by the embodiment of the present disclosure, the more the number of the parallel closed loops in the electromagnetic induction unit is, the more the generated induced electric energy is. But too numerous closed loops may affect the movement of the carrier.

Similarly, in the wearable power generation garment provided by the embodiment of the present disclosure, the larger the area encircled by the closed loop and the opposite area of the magnet is, the more the generated induced electric energy is. But too larger opposite area may affect the movement of the carrier.

In an example, in the wearable power generation garment provided by the embodiment of the present disclosure, as shown in FIG. 4, the energy storage unit 3 substantially includes an AC-to-DC module 31 and an energy storage module 32. Two input ends of the AC-to-DC module 31 are respectively connected with output ends of the electromagnetic induction units 2, so as to convert the induced current generated on the electromagnetic induction units 2 into DC and output the DC to the energy storage module 32 for storage.

In an example, in the wearable power generation garment provided by the embodiment of the present disclosure, as shown in FIG. 4, the AC-to-DC module 31 includes a bridge rectifier circuit.

Two input ends of the bridge rectifier circuit are respectively connected with the output ends of the electromagnetic induction units 2, and two output ends are respectively connected with both ends of the energy storage module 32.

In an example, the structure of the bridge rectifier circuit is the same as the one in the art. As shown in FIG. 4, it substantially includes 4 diodes (D1, D2, D3 and D4), but the embodiments of the present disclosure are not limited thereto.

In an example, in the wearable power generation garment provided by the embodiment of the present disclosure, the energy storage module is, for instance, a small-size supercapacitor (within 2.7 volts).

In an example, in the wearable power generation garment provided by the embodiment of the present disclosure, as shown in FIG. 4, a closed loop 21 substantially includes a lead 211 and a step-up coil 212, and induced voltage generated on the lead 211 is stepped up by the step-up coil 212 and outputted to the bridge rectifier circuit.

In an example, in the wearable power generation garment provided by the embodiment of the present disclosure, the surface magnetic field strength of the magnet unit is greater than or equal to 0.3T.

In an example, the wearable power generation garment provided by the embodiment of the present disclosure also includes a display unit. The display unit is configured to display the value of the electric energy stored by the energy storage unit, so that the user can conveniently check the charging condition.

Based on the same concept, the embodiment of the present disclosure also provides a power generation method, inlcuding: wearing any of the wearable power generation devices provided by the embodiments of the present disclosure or any of the wearable power generation garments provided by the embodiments of the present disclosure on an animal body, and generating electric energy during the movement of the animal body.

In the wearable power generation device, the wearable power generation garment and the power generation method, provided by the embodiments of the present disclosure, the wearable power generation device includes at least one magnet unit, at least one electromagnetic induction unit and an energy storage unit electrically connected with the at least one electromagnetic induction unit. The magnet unit and the electromagnetic induction unit are respectively disposed at different positions of an animal body. Induced current is generated by the change of the magnetic flux running through the electromagnetic induction unit due to the change of relative positions of the magnet unit and the electromagnetic induction unit during the movement of the animal body. The energy storage unit is configured to convert the induced current generated by the electromagnetic induction unit into electric energy for storage. The power generation device applies the law of electromagnetic induction, generates electricity by the generation of the induced current due to the change of the magnetic flux running through the electromagnetic induction unit by the movement of the animal body, and stores the electric energy for later use. The power generation device has advantages of simple structure, portable, convenient, environment-friendly, noise-free and low cost.

The described above are only exemplary embodiments of the present disclosure, and the present disclosure is not intended to be limited thereto. For one of ordinary skill in the art, various changes and alternations may be made without departing from the technical scope of the present disclosure, and all of these changes and alternations shall fall within the scope of the present disclosure.

The application claims priority to the Chinese patent application No. 201510549363.5 filed on August 31, 2015 and entitled "Wearable Power Generation Device, Wearable Power Generation Garment and Power Generation Method," which is incorporated herein by reference in its entirety.

## Claims

1. A wearable power generation device, comprising: at least one magnet unit, at least one electromagnetic induction unit and an energy storage unit electrically connected with the at least one electromagnetic induction unit, wherein
the magnet unit and the electromagnetic induction unit are respectively designed to be worn at different positions of an animal body; induced current is generated by a change of the magnetic flux running through the electromagnetic induction unit due to a change of relative positions of the magnet unit and the electromagnetic induction unit during movement of the animal body; and
the energy storage unit is configured to convert the induced current generated by the electromagnetic induction unit into electric energy for storage.

2. The wearable power generation device according to claim 1, wherein
the magnet unit and the electromagnetic induction unit are respectively disposed on the limbs and/or the trunk of the human being.

3. The wearable power generation device according to claim 1 or 2, wherein the magnet unit includes at least one magnet, and the electromagnetic induction unit includes a single closed loop or a plurality of parallel closed loops.

4. The wearable power generation device according to claim 3, wherein the magnet is a flexible magnet.

5. The wearable power generation device according to any one of claims 1 to 4, wherein a surface magnetic field strength of the magnet unit is greater than or equal to 0.3T.

6. The wearable power generation device according to any one of claims 1 to 5, further comprising a display unit, wherein the display unit is configured to display a value of the electric energy stored by the energy storage unit.

7. A wearable power generation garment, comprising:

a garment body;
at least one magnet unit;
at least one electromagnetic induction unit; and
an energy storage unit electrically connected with the at least one electromagnetic induction unit, wherein
the magnet unit and the electromagnetic induction unit are respectively fixed at different positions of the body; induced current is generated by a change of the magnetic flux running through the electromagnetic induction unit due to a change of relative positions of the magnet unit and the electromagnetic induction unit during a movement of an animal body wearing the power generation garment; and
the energy storage unit is configured to convert the induced current generated by the electromagnetic induction unit into electrical energy for storage.

8. The wearable power generation garment according to claim 7, wherein the body is a pair of trousers; the magnet unit is disposed on one trouser leg of the trousers; and the electromagnetic induction unit is disposed on the other trouser leg.

9. The wearable power generation garment according to claim 7, wherein the body is a coat with sleeves, in which
the magnet unit is disposed on one sleeve of the coat

and the electromagnetic induction unit is disposed on the other sleeve; or the magnet unit is disposed on one of the sleeve and the body of the coat, and the electromagnetic induction unit is disposed on the other of the sleeve and the body.

10. The wearable power generation garment according to claim 8, wherein
both the magnet unit and the electromagnetic induction unit are disposed on insides of the trouser legs, so that the magnet unit and the electromagnetic induction unit can be oppositely arranged.

11. The wearable power generation garment according to claim 9, wherein
the magnet unit is fixed on a side surface of the body of the coat, and the electromagnetic induction unit is fixed at a relative position on an inside of the sleeves of the coat, so that the magnet unit and the electromagnetic induction unit is oppositely arranged; or
the electromagnetic induction unit is fixed on a side surface of the body of the coat, and the magnet unit is fixed at a relative position on an inside of the sleeves of the coat, so that the magnet unit and the electromagnetic induction unit is oppositely arranged.

12. The wearable power generation garment according to any one of claims 7 to 11, wherein
the magnet unit is fixed on the body by sewing, bonding or binding; and/or
the electromagnetic induction unit is fixed on the body by sewing, bonding or binding.

13. A power generation method, comprising: wearing the wearable power generation device according to any one of claims 1 to 6 or the wearable power generation garment according to any one of claims 7 to 12 on an animal body; and generating electric energy during the movement of the animal body.

1

2

3

Electromagnetic
Induction Unit

Energy
Storage
Unit

FIG. 1

11

21

3

FIG. 2a

FIG. 2b

FIG. 2c

2 1

FIG. 3a

FIG. 3b

EP 3 346 577 A1

FIG. 3c

14

FIG. 3d

FIG. 4

FIG. 5a

FIG. 5b

FIG. 6a

FIG. 6b

FIG. 6c

FIG. 6d

FIG. 7a

01

2

1

1

2

1

FIG. 7b

# INTERNATIONAL SEARCH REPORT

| International application No. |
|---|
| **PCT/CN2015/098064** |

### A. CLASSIFICATION OF SUBJECT MATTER

H02J 7/32 (2006.01) i

According to International Patent Classification (IPC) or to both national classification and IPC

### B. FIELDS SEARCHED

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CPRS, VEN, DWPI, CNPAT: power generation, body, limb; magnet, generat+, walk+, mov+, induct+, clothing, wearing

### C. DOCUMENTS CONSIDERED TO BE RELEVANT

| Category* | Citation of document, with indication, where appropriate, of the relevant passages | Relevant to claim No. |
|---|---|---|
| X | CN 104638743 A (LI, Pan), 20 May 2015 (20.05.2015), description, paragraphs [0015]-[0019], and figures 1-3 | 1-4, 13 |
| Y | CN 104638743 A (LI, Pan), 20 May 2015 (20.05.2015), description, paragraphs [0015]-[0019], and figures 1-3 | 5-12 |
| Y | CN 2869609 Y (HU, Jiankun), 14 February 2007 (14.02.2007), description, page 4, lines 10-14, claims 1-6, and figures 6-7 | 5-12 |
| X | CN 202635755 U (ZENG, Shengke), 02 January 2013 (02.01.2013) description, the part of particular embodiments | 1 |
| A | CN 200969905 Y (HUAGANG SCIENCE AND TECHNOLOGY CO., LTD.), 07 November 2007 (07.11.2007), the whole document | 1-13 |
| A | EP 1363380 A1 (CIBIE, P.), 19 November 2003 (19.11.2003), the whole document | 1-13 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 January 2016 (20.01.2016) | **13 May 2016 (13.05.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YU, Junwei** Telephone No.: (86-10) **010-62089279** |
|---|---|

Form PCT/ISA/210 (second sheet) (July 2009)

## INTERNATIONAL SEARCH REPORT
### Information on patent family members

International application No.

**PCT/CN2015/098064**

| Patent Documents referred in the Report | Publication Date | Patent Family | Publication Date |
|---|---|---|---|
| CN 104638743 A | 20 May 2015 | None | |
| CN 2869609 Y | 14 February 2007 | None | |
| CN 202635755 U | 02 January 2013 | US 2013247410 A1 | 26 September 2013 |
| CN 200969905 Y | 07 November 2007 | None | |
| EP 1363380 A1 | 19 November 2003 | US 2004251754 A1 | 16 December 2004 |
| | | US 6992415 B2 | 31 January 2006 |
| | | FR 2839823 A1 | 21 November 2003 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510549363